# EUROPEAN PATENT APPLICATION

(11) **EP 4 732 652 A1**
(43) Date of publication of application: **29.04.2026**
(21) Application number: 25211361.8
(22) Date of filing: 27.10.2025
(51) Int. Cl.: A01C 7/04, A01C 15/00

(54) **SOWING DEVICE FOR A SEEDING MACHINE**

(30) Priority: 25.10.2024 IT 202400023877
(71) Applicant: ROTER ITALIA Srl, 46035 Ostiglia (MN) (IT)
(72) Inventor: FORIGO, Alberto, 46035 Ostiglia (MN) (IT)
(74) Representative: Caldon, Giuliano

(57) **Abstract**

Sowing device for a seeding machine, adapted to distribute seeds on the ground, which comprises a support body (2), intended to be fixed to a seeding machine and provided with at least one deposit opening (20), a hopper (3), mounted on the support body (2), adapted to contain seeds to be distributed, and provided with a pick-up opening (31). The device (1) also comprises a distribution group (4), which is mounted on the support body (2), and is configured for receiving at least one seed from the hopper (3), through the pick-up opening (31), and moving it to the deposit opening (20) of the support body (2).

The sowing device (1) also comprises at least one vibration generator (5), mechanically connected to the hopper (3) and adapted to impart a vibration to the hopper (3), in order to induce the decompaction of said seeds in proximity to the pick-up opening (31).

## Description

### Field of application

The present invention regards a sowing device for a seeding machine, according to the preamble of independent claim 1.

The present device is mountable on a seeding machine, which is adapted to distribute seeds on the ground to be cultivated, and therefore advantageously is used in the agricultural sector for seeding cultivations, for example vegetable gardens.

The seeding machine on which the aforesaid device is intended to be mounted can be of self-propelled type, or alternatively it can be connected to a tractor in order to be towed on the ground.

The device, object of the present invention, is therefore inserted in the context of the industrial field of production of devices for farming machines.

### State of the art

Known in the field of production of farming machines are seeding machines for distributing seeds on the ground in an automated manner. Such seeding machines are mechanically connectable in a removable manner to motorized machinery, normally farming tractors, in order to be towed on the ground intended to house the seeds to be distributed.

As is known, the seeding machines are adapted to distribute the seeds on the ground, aligning them along one or more tracks that are substantially parallel to each other and parallel to the advancement direction of the tractor.

The seeding machines of known type are provided with a support frame mechanically connectable to the tractor, with a hopper supported by the support frame intended to contain the seeds to be distributed and with a blade projecting below of curved form or diverging discs that move the ground in order to make a groove and susceptible of being partially inserted in the ground in order to make a rectilinear groove in the ground.

The hopper supported by the support frame is normally placed in communication with a meter, placed below the seeding machine, it too fixed to the support frame and placed behind the blade with respect to the advancement direction of the tractor. In this manner, during the seeding operations, the seeding machine towed by the tractor distributes the seeds in the rectilinear groove, formed by means of the aforesaid blade, in a substantially uniform manner.

In addition, in order to allow the sowing on terrain previously treated by means of mulching, seeding machines have been developed that are termed in the technical jargon of the seeding machine field to be "precision" machines. Such precision seeding machines are normally provided with a disc for distributing seeds, which is rotatably mounted on the support frame around a substantially horizontal axis, and is configured for picking up a seed from a distribution opening on the hopper and transporting it up to precise drop point, at which an opening on the mulching sheet is placed on the ground.

Such precision seeding machines provide that the distribution disc be provided with a plurality of through openings, placed perimetrically, and that the machine is provided with an air aspirator, which suctions the air through the through openings of the disc in order to allow picking up a seed from the hopper in order to transport it from the pick-up point to the deposit point.

However, such seeding machines and the relative sowing devices have in practice proven that they do not lack drawbacks.

The main drawback lies in the fact that such sowing devices are unable to ensure the correct and precise metering of the seed in the various points where it is expected.

This is due to the fact that is several cases, the seeds can be packed together within the hopper, in particular in the case of seeds of reduced size and which have high surface roughness.

Indeed, in such case the seeds tend to be packed together, unable to be suctioned effectively by the distribution disc, determining a lack of distribution at several points of the ground.

In order to at least partially overcome such drawback, the aforesaid devices of known type have been improved by giving them comb-like stirring elements, which are mechanically connected to the sowing disc, and are thus movable together with the latter in order to mechanically interact with the seeds contained in the hopper, thus to determine their movement and decompaction.

In particular, such devices provide that the combs are mounted directly on the surface of the distribution disc, or alternatively they are mounted on a rotary element that is rotatably connected to the rotor that moves the disc, by means of a conical torque.

Nevertheless, also such solutions have in practice shown that they do not lack drawbacks.

In particular, the main drawback lies in the fact that such devices are subject to wear and deterioration of combs, which can also lead to their breakage.

This can determine not only the lack of stirring of the seeds contained in the hopper, no longer working the combs, but also in several cases could cause jamming of the distribution disc.

Therefore, such devices of known type have the drawback of requiring frequent and expensive maintenance operations during their lifetime.

In addition, such devices are unable to ensure a complete and reliable decompaction of the seeds contained in the hopper.

A further drawback of the devices of known type lies in the fact that they are extremely complicated and difficult to make, providing for a large number of mechanical components, which determine an increased risk of wear and/or breakage during operation.

A further drawback of the devices of known type lies in the fact that such devices allow mixing the seeds only during the operation of the seeding machine, and hence following the actuation of the sowing disc, not allowing the decompaction of the seeds also in other situations, for example before the actuation of the machine. Therefore, such devices of known type have in practice shown that they are not very flexible nor adaptable to the various situations and contexts where they could be applied.

Seeding machine are also known, for example from the documents US 2020/174467, WO 2011/053286 and KR 102031785, which are provided with devices comprising a vibration generator, which is placed inside the hopper and is adapted to come into contact with the seeds placed in the containment channel, in order to make them vibrate directly, making them advance along the channel of the hopper up to the pick-up opening where they are collected by a a sowing disc or other advancement devices.

### Presentation of the invention

The main object of the present invention is therefore that of overcoming the drawbacks manifested by the solutions of known type, by providing a sowing device for a seeding machine that allows obtaining an effective and efficient decompaction of the seeds contained in the hopper and to be deposited on the ground.

Another object of the present invention is to provide a sowing device which allows an effective decompaction even when the seeding machine is not in operation.

Another object of the present invention is to provide a sowing device that is simple to assemble and disassemble.

Another object of the present invention is to provide a sowing device that is simple and inexpensive to make.

Another object of the present invention is to provide a sowing device that is entirely functional and reliable in operation.

Another object of the present invention is to provide a sowing device that lasts over time and does not require frequent maintenance operations.

### Brief description of the drawings

The technical characteristics of the invention, according to the aforesaid objects, can be clearly seen in the below-reported claims and the advantages thereof will be more evident from the following detailed description, made with reference to the enclosed drawings, which represent a merely exemplifying and non-limiting embodiment of the invention, in which:

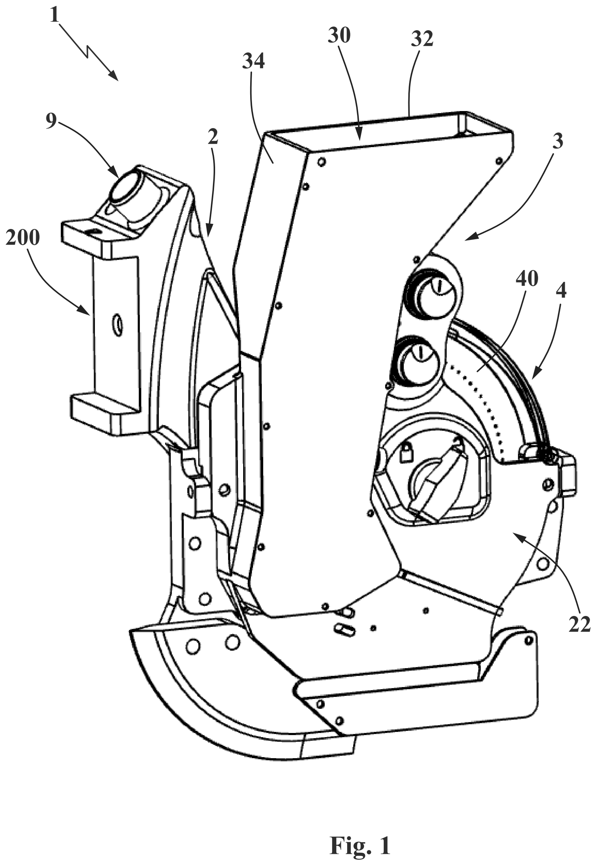

- figure 1 shows a perspective view of a sowing device for a seeding machine, object of the present invention;

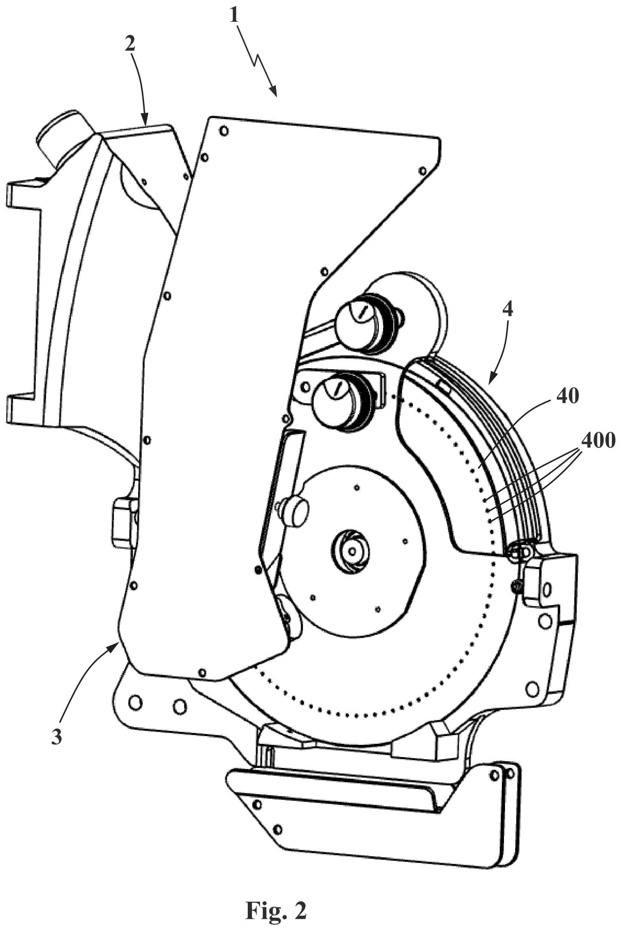

- figure 2 shows a second perspective view of the sowing device, with several parts removed in order to better illustrate other parts;

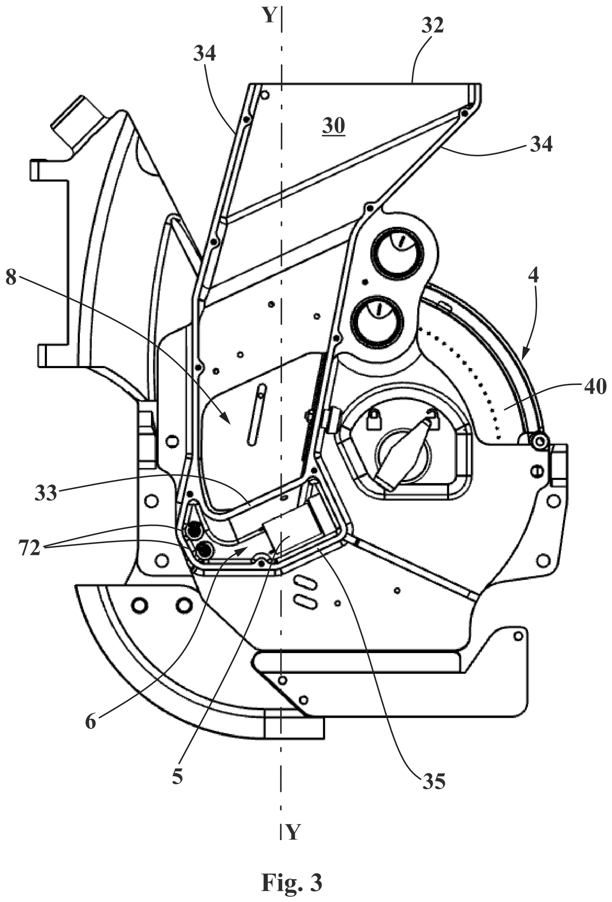

- figure 3 shows a side view of the sowing device of figure 1, with several parts removed in order to better illustrate other parts;
- figure 4 shows a detail of the device of figure 2, relative to a distribution group of the device;
- figure 5 shows a detail of the device of figure 3, relative to a vibration generator in accordance with a first embodiment;

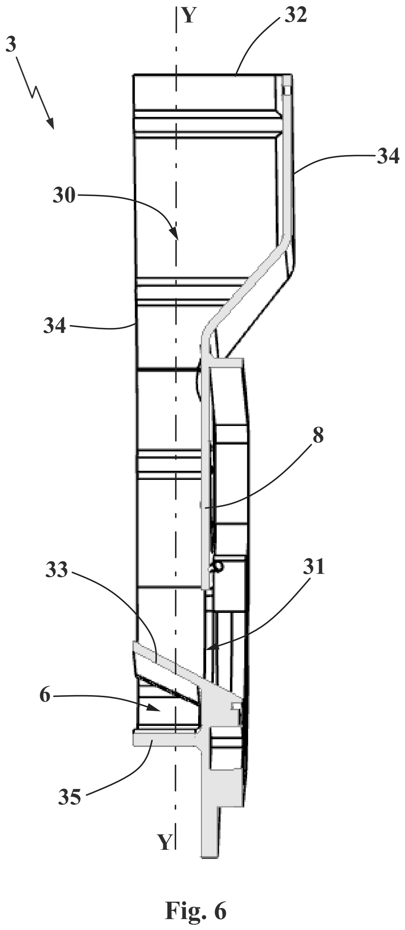

- figure 6 shows a side section view of a detail of the device of figure 1, relative to a hopper.

### Detailed description of a preferred embodiment

With reference to the enclosed drawings, reference number 1 overall indicates the sowing device for a seeding machine, object of the present invention, which is adapted to distribute seeds on the ground.

More in detail, the sowing device 1, object of the present invention, is advantageously mountable on a seeding machine, which is intended to be moved on the ground along an advancement direction, and is advantageously intended to be fixed to a tractor, such as for example a wheel or belt tractor of farming type in order to be towed along the advancement direction during its operation, otherwise it could also be of self-propelled type.

With the term "seeds", it must be intended hereinbelow any type of seeds susceptible of being set on or in the ground so as to make at least one plant of any type, purpose and nature germinate and grow. Normally, the present seeds have grain form and are set on the ground at several centimeters depth, e.g. a depth comprised between 1 and 6 cm.

The seeding machine 1, object of the present invention, is advantageously employable for distributing the seeds, e.g. vegetable garden use, both in a groove made in the ground, and without making any groove.

In accordance with the invention, the sowing device 1 comprises a support body 2, preferably metallic, which is intended to be fixed, for example by means of a clamp 200, to a seeding machine. The support body 2 is provided with at least one deposit opening 20, for depositing one or more seeds on the ground, as better explained hereinbelow.

The device 1 also comprises a hopper 3, mounted on the support body 2, which is adapted to contain the seeds to be distributed and is provided with a pick-up opening 31.

The device 1 also comprises a distribution group 4, which is mounted on the support body 2, and is configured for receiving at least one seed from the hopper 3, through the pick-up opening 31, and moving it to the deposit opening 20 of the support body 2.

In other words, the distribution group 4 allows picking up at least one seed from the hopper 3, through the pick-up opening 31, in order to move it to the deposit opening 20 of the support body 2, where the seed is deposited on the ground to be sowed (directly or passing through a conveyance duct).

Such distribution group 4 can be of mechanical or pneumatic type, as is better described hereinbelow.

In accordance with the idea underlying the present invention, the sowing device 1 comprises at least one vibration generator 5, preferably electric, mechanically connected to the hopper 3 and adapted to impart a vibration to the hopper 3, in order to induce the decompaction of the seeds, in particular in proximity to the pick-up opening 31.

More in detail, as better discussed hereinbelow, the vibration generator 5 can be fixed directly to the hopper 3, or it can be connected indirectly to the hopper 3, for example by mounting it on another element (a plate of the device 1, a possible closure lid etc.) in turn connected to the hopper 3, as long as it is susceptible of transmitting the vibrations received from the vibration generator 5 to the hopper 3.

In particular, the vibration generator 5 is a device adapted to impart vibrations to the hopper 3, directly or indirectly, so as to induce a vibration of the hopper 3 which determines a movement of the seeds contained therein. In this manner, the seeds that are possibly packed together, in particular for example in the case of single-germ seeds of small size and having a high surface roughness, tend to be separated by facilitating the subsequent step of loading on the distribution group 4 and depositing on the ground.

Therefore, by means of the use of a vibration generator 5, a device 1 is obtained which simplifies and facilitates the subsequent sowing step, rendering the deposit of the seed on the ground at each programmed sowing point more effective and efficient.

Advantageously, the hopper 3 comprises a containment channel 30, which is extended, along a main extension direction Y, between an upper loading opening 32, adapted to allow the loading of the seeds into the hopper 3, and the aforesaid lower pick-up opening 31, through which in particular the seeds are picked up from the distribution group 4 in order to be deposited on the ground.

In accordance with the preferred embodiment, the loading opening 32 is placed horizontally, substantially parallel to the ground during use of the device 1, while pick-up opening 31 is placed transverse to the loading opening 32, substantially vertically.

Advantageously, the hopper 3 can also comprise a shutter 8, preferably mobile, which is placed at the pick-up opening 31 and is preferably movable (in particular manually) in order to selectively close and open the pick-up opening 31 of the hopper 3 in order to respectively prevent and allow the passage of the seeds contained in the hopper 3 through the pick-up opening 31, towards the distribution group 4.

Advantageously, the hopper 3 is provided with a bottom wall 33, which delimits, on the lower part, the containment channel 30 and is placed transverse to the pick-up opening 31.

More in detail, the containment channel 30 is extended along the aforesaid main extension direction Y, starting from the loading opening 32, up to the bottom wall 33 which defines an abutment wall for the seeds contained in the hopper 3, while the aforesaid pick-up opening 31 is preferably made on the side of the hopper 3, in particular facing towards the distribution group 4 of the device 1. Preferably, the vibration generator 5 is placed outside the containment channel 30, so as to not come into contact with the seeds placed in the aforesaid channel 30.

In particular, the vibration generator 5 is placed at the bottom wall 33 of the hopper 3, so as to determine a vibration of the latter, in order to obtain an optimal decompaction of the seeds which lie on such bottom wall 33 and which hence are placed close to the pick-up opening 31. Preferably, the vibration generator 5 is mechanically connected to the bottom wall 33 of the hopper 3, in a manner such to maximize the vibrations induced on such bottom wall 33.

Advantageously, the device 1 comprises a housing seat 6, which is separated from the containment channel 30, preferably by means of the bottom wall 33, and the vibration generator 5 is housed in the housing seat 6 of the hopper 3. In particular, in accordance with the preferred embodiment illustrated in the enclosed figures, the housing seat 6 is made in the hopper 3, below the containment channel 30.

More in detail, the hopper 3 is advantageously formed by a single containment body, provided with two opposite side walls 34 and with the bottom wall 33, which is placed to connect between the two side walls 34 and delimits, in the hopper 3, the containment channel 30, open on the upper part with the loading opening 32, and the aforesaid housing seat 6.

Therefore, the housing seat 6 is thus in particular delimited on the upper part by the bottom wall 33 and laterally by the side walls 34 of the hopper 3. Preferably, the hopper 3 also has a lower wall 35, which is placed substantially parallel to the bottom wall 33 and on the lower part delimits the housing seat 6.

Advantageously, as set forth above, the vibration generator 5 is electric, and for such purpose the device 1 comprises electric connection means 7, intended to electrically connect the vibration generator 5 to an electric power supply source mounted on the seeding machine.

Advantageously, the support body 2 comprises a fixed first plate 21, which carries, mounted thereon, the distribution group 4, and a second plate 22, which is removably mounted on the first plate 21 and carries, mounted thereon, the hopper 3.

Advantageously, the device 1 comprises a first electric connector 71, intended to be connected to the electric power supply source, and a second electric connector 72, electrically connected to the first electric connector 71 and to the vibration generator 5.

Preferably, the two electrical connectors 71, 72 are formed by two connection elements, one for each electrical communication wire.

Advantageously, the second electric connector 72 is partially housed in the housing seat 6, and preferably the housing seat 6 is provided with at least one passage opening adapted to house the aforesaid second electric connector 72, in order to allow its electrical connection to the first electric connector 71. Preferably, the passage opening of the housing seat 6 is provided with an insulation element, e.g. a ring made of plastic material, which insulates the second connector 72 from the metal surface of the hopper 3.

In particular, the housing seat 6 is shaped such to provide for a main portion in which the vibration generator 5 is housed, and a curved portion, connected to the main portion, in which the second electric connector 72 is placed.

Advantageously, the first electric connector 71 is mounted on the first plate 21, while the second electric connector 72 is mounted on the second plate 22.

In this manner, it is possible to easily separate the two plates 21, 22 which form the support structure 2 from each other, for example in order to carry out maintenance activities on the distribution group 4.

Advantageously, the first electric connector 71 and the second electric connector 72, are of pogo-pin type.

In particular, a pogo-pin connector is a type of electrical connector that comprises a connection element (made of an electrically conductive material) which is inserted in a seat with a spring interposed, which has the object of pressing the corresponding connection element against the other connector, in order to ensure the contact between the two conductive surfaces.

In this manner, it is possible to even more easily dismount and remount the two plates 21, 22 that form the support structure 2 from/on each other, without having to intervene on several electrical components of the sowing device 1.

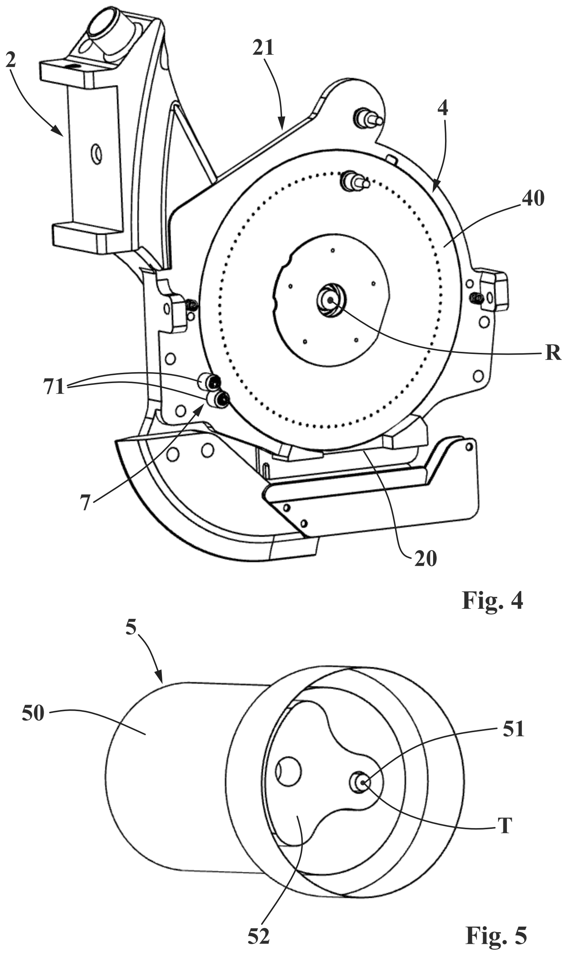

In the same manner, as is visible in figure 4, the first plate 21 has respective openings for housing the first electric connector(s) 71, preferably of pogo-pin type.

Of course, in such case the openings made on the first and on the second plate 21, 22 will be made coaxially, such to render the first and the second electrical connectors 71, 72 immediately and directly communicating.

Advantageously, the device 1 comprises a logic control unit, connected to the vibration generator 5, in order to command it independently with respect to the distribution group 4.

More in detail, the vibration generator 5 is mechanically and preferably logically unconstrained from the distribution group, so to be actuatable and controllable even when the sowing device 1 is not in operation, for example when the seeding machine is not carrying out seeding operations.

In such case, it is possible to provide for a wireless command or alternatively a wired command which preferably exploits the same principle and passage for the electrical power supply of the vibration generator 5.

Advantageously, the vibration generator 5 is a rotary vibrating electric motor 50, comprising a rotor shaft 51, which is actuatable in rotation around an actuation axis T thereof, and an eccentric element 52, fixed to the rotor shaft 51 and adapted to generate vibrations during its rotation around the actuation axis T.

More in detail, in operation, when the rotor shaft 51 rotates around the actuation axis T, the unbalanced mass of the eccentric 52 generates a centrifugal force which causes a vibration, which is transmitted to the hopper 3, for example by means of its bottom wall 33. Of course, the force and the intensity of the vibration can be determined by adjusting the rotation speed of the rotor shaft 51, or the mass of the eccentric 52.

The advantage of employing such motor type consists of its compaction, of the simplicity of power supply thereof (since it employs low-power direct voltage (DC), often between 1.5V and 12V) and of its duration.

Alternatively, the vibration generator 5 can be a linear vibrating electric motor.

Such motor types, also termed "LRA" or Linear Resonant Actuator are adapted to generate vibrations with a linear movement, instead of rotary movement. Such linear motors advantageously comprise a suspended magnet (suspended from a spring), in a manner such that when alternating current is applied, the magnet is moved back and forth along a linear axis, producing a vibration.

As set forth above, the distribution group 4 can be of mechanical type or of pneumatic type.

More in detail, the distribution group 4 of mechanical type comprises for example a stator fixed to the hopper 3, and preferably connected to a conveyance duct connected to the deposit opening 20 of the support body 2.

In particular, the stator is provided with a first upper opening, in communication with the hopper 3 in order to receive the seeds that fall by gravity, and with a second lower opening, in communication with the conveyance duct in order to unload the seeds S at its interior, always by gravity.

In addition, the mechanical distribution group 4 comprises a rotor rotatably inserted within the stator and peripherally provided with a plurality of cells that are equidistant from each other and each adapted to contain a dose of seeds S (e.g. only one seed or multiple seeds) coming from the hopper 3.

More in detail, the first opening of the stator is cyclically in communication with each cell of the rotor in order to power supply it with the doses of seeds S coming from the hopper 3. In a similar manner, the second opening of the stator is cyclically in communication with each cell of the rotor in order to receive the doses of seeds S therefrom and unload them into the conveyance duct. Thus, in operation, the rotation of the rotor allows transporting the dose of seeds contained in each cell of the rotor from the first upper opening of the stator up to the lower second opening of the stator itself, i.e. from the hopper 3 to the conveyance duct, separating each dose of seeds from the preceding and from the subsequent doses housed in the adjacent cells of the rotor.

Otherwise, the distribution group 4 can be of pneumatic type, i.e. provided with a suction tube 9, preferably made on the clamp 200 of the support body 2, through which the air is suctioned within the distribution group 4 so as to create reduced pressure at its interior adapted to suction the seeds from the hopper 3. More in detail the distribution group 4 is also provided with a perforated disc 40, which is rotatably housed inside a fixed body of the distribution group 4 and is provided with a plurality of through holes 400, distributed equidistant along a peripheral circumference. More in detail, the perforated disc 40 delimits, within the body of the distribution group 4, at least two chambers placed at different pneumatic pressure, regarding which a first chamber is in communication with the hopper 3 and a second chamber is in communication with the conveyance duct. More in detail, the first chamber of the distribution group 4 is placed in reduced pressure such that the seeds S, which arrive from the hopper 3, remain adhered, one to each hole 400 of the perforated disc 40, and in this manner they are separated from each other.

Subsequently, the rotation of the perforated disc 40 transports each seed S from the pick-up opening 31 of the hopper 3 up to the deposit opening 20, or an inlet section of the conveyance duct, where the reduced pressure that maintains the seed S adhered to the perforated disc 40 is canceled (e.g. through a mechanical member placed to drag on the perforated disc itself) and the seed falls by gravity within the conveyance duct. Subsequently, the seed continues its fall by gravity within the conveyance duct up to coming into contact with the ground where it is deposited in the sowing position.

The sowing device 1 thus conceived therefore attains the pre-established objects.

## Claims

1. Sowing device for a seeding machine, adapted to distribute seeds on the ground, which comprises:
- a support body (2), intended to be fixed to a seeding machine and provided with at least one deposit opening (20);
- a hopper (3), mounted on said support body (2), adapted to contain said seeds to be distributed, and provided with a pick-up opening (31);
- a distribution group (4), which is mounted on said support body (2), and is configured for receiving at least one seed from said hopper (3), through said pick-up opening (31), and moving it to the deposit opening (20) of said support body (2);
said sowing device (1) being **characterized in that** it comprises at least one vibration generator (5), mechanically connected to said hopper (3) and adapted to impart a vibration to said hopper (3), in order to induce the decompaction of said seeds in proximity to said pick-up opening (31);
wherein said hopper (3) has a containment channel (30), which is extended, along a main extension direction (Y), between a loading opening (32), adapted to allow the loading of said seeds in said hopper (3), and said pick-up opening (31);
wherein said hopper (3) is provided with a bottom wall (33), which delimits, on the lower part, said containment channel (30) and is placed transverse to said pick-up opening (31), and in which said vibration generator (5) is placed outside said containment channel (30), at the bottom wall (33) of said hopper (3).

2. Sowing device according to claim 1, **characterized in that** it comprises a housing seat (6), in which said vibration generator (5) is housed.

3. Sowing device according to claim 2, **characterized in that** said housing seat (6) is separated from said containment channel (30) by means of said bottom wall (33).

4. Sowing device according to claim 3, **characterized in that** said vibration generator (5) is mechanically connected to the bottom wall (33) of said hopper (3).

5. Sowing device according to claim 3 or 4, **characterized in that** said housing seat (6) is made in said hopper (3), below said containment channel (30).

6. Sowing device according to any one of the preceding claims, **characterized in that** said vibration generator (5) is electric, and **in that** said device (1) comprises electric connection means (7), intended to electrically connect said vibration generator (5) to an electric power supply source mounted on said seeding machine;
in which said support body (2) comprises:
- a fixed first plate (21), which carries, mounted thereon, said distribution group (4); and
- a second plate (22), which is removably mounted on said first plate (21) and carries, mounted thereon, said hopper (3);
in which said device (1) comprises a first electric connector (71), intended to be connected to said electrical power supply source, mounted on said first plate (21), and a second electric connector (72), mounted on said second plate (22), electrically connected to said first electric connector (71) and to said vibration generator (5).

7. Sowing device according to claim 6, **characterized in that** said first electric connector (71) and said second electric connector (72), are of pogo-pin type.

8. Sowing device according to any one of the preceding claims, **characterized in that** it comprises a logic control unit, connected to said vibration generator (5), in order to command said vibration generator (5) in a manner independent from said distribution group (4).

9. Sowing device according to any one of the preceding claims, **characterized in that** said vibration generator (5) is a rotary vibrating electric motor, comprising a rotor shaft, which is actuatable in rotation around an actuation axis (T) thereof, and an eccentric element, fixed to said rotor shaft and adapted to generate vibrations during the rotation thereof around said actuation axis (T).

10. Sowing device according to any one of the claims 1 to 8, **characterized in that** said vibration generator (5) is a linear vibrating electric motor.
